# EUROPÄISCHE PATENTSCHRIFT

(11) **EP 0 546 647 B1**
(45) Veröffentlichungstag und Bekanntmachung des Hinweises auf die Patenterteilung: **05.03.1997**
(21) Anmeldenummer: 92250284.4
(22) Anmeldetag: 07.10.1992
(51) Int. Cl.: G06F 11/16, B61L 1/20

(54) **Verfahren und Einrichtung zur signaltechnisch sicheren Eingabe binärer Signale in ein signaltechnisch sicheres Rechnersystem**
Method and device for secure signal inputting of binary signals in a signal secure computer system
Procédé et dispositif d'introduction de données, fiable au plan de la technique de signalisation, dans un système à ordinateur fiable au plan de la technique de signalisation

(30) Priorität: 13.12.1991 DE 4141731
(43) Veröffentlichungstag der Anmeldung: 16.06.1993
(73) Patentinhaber: SIEMENS AKTIENGESELLSCHAFT, 80333 München (DE)
(72) Erfinder: Strelow, Horst, W-3302 Cremlingen 1 (DE)

(56) Entgegenhaltungen:
- DE-A- 3 503 287
- SIGNAL + DRAHT, Bd.76, Nr.3, März 1984, DARMSTADT DE Seiten 35 - 41 H. BAUER 'Sicheres Mikrorechnersystem LOGISIRE'
- CONTROL AND INSTRUMENTATION, Bd.2, Nr.10, Oktober 1970, LONDON GB Seiten 51 - 55 A.B. KEATS 'Failure Survival in Safety and Interlock Systems'
- SIGNAL + DRAHT, Bd.78, Nr.9, September 1986, DARMSTADT DE Seiten 192 - 197 L.W. SCHIWEK 'Failsafe-Schaltungen mit der LOGISAFE-GS-Technik'

## Beschreibung

Die Erfindung bezieht sich auf ein Verfahren nach dem Oberbegriff des Patentanspruches 1 sowie auf eine Einrichtung zur Durchführung dieses Verfahrens. Ein solches Verfahren und eine solche Einrichtung sind Stand der Technik, wie zum Beispiel in der Zeitschrift Signal+Draht, Band 76, Nr. 3, Seiten 35-41 unter dem Titel "Sicheres Mikrorechner system LOGISIRE" beschrieben.

In der DE-Zeitschrift Elektronische Rechenanlagen, 1980, Heft 5, Seiten 229 bis 236 wird unter dem Titel "Sicherheit von Mikrocomputern für die Eisenbahnsignaltechnik" über ein signaltechnisch sicheres Mehrrechnersystem berichtet, das aus zwei baugleichen und die gleichen Daten und Programme verarbeitenden Einzelrechnern besteht. Die beiden Einzelrechner werden mit Hilfe zusätzlicher Vergleicher ständig auf Übereinstimmung überprüft. Sie haben nur solange Zugriff auf die zu steuernde Prozeßperipherie, solange auf ihren Bus- und Ausgabeleitungen jeweils gleichzeitig die gleichen Signale anliegen; bei etwaigen Abweichungen werden die Einzelrechner von den Vergleichern abgeschaltet oder mindestens ihre Verbindung zur Prozeßperipherie signaltechnisch sicher unterbrochen.

Für die zweikanalige Verarbeitung der dem Rechnersystem zugeführten Eingangsdaten werden diese Eingangsdaten den Einzelrechnern auch zweikanalig zugeführt, wobei diese Daten auf beiden Eingangskanälen vielfach invers dargestellt sind. Die Eingangsdaten auf den beiden Eingangskanälen werden entweder per Hardware oder per Software jeweils unabhängig voneinander an beide Einzelrechner übermittelt und dort auf logische Übereinstimmung geprüft.

Die Eingangsdaten werden den Rechnern des sicheren Rechnersystems regelmäßig über Eingabebaugruppen, vorzugsweise Register, zugeführt. Diese Register sind vielfach in hochintegrierter Technik dargestellt; das mögliche Ausfallverhalten dieser Register ist weitgehend unbekannt. Um sichergehen zu können, daß die Eingangsdaten in den Registern nicht unerkannt verfälscht werden, ist es bekannt, diese Register auf ordnungsgerechtes Funktionsverhalten zu überprüfen. Dies kann z. B. geschehen durch vorübergehendes Invertieren mindestens bestimmter Eingangssignale (DE 32 34 787 C2) oder durch zweimalige Verknüpfung dieser Signale mit beliebigen anderen Signalen nach einer EXOR-Bedingung, wobei diese Verknüpfung zum einen rechnerextern und zum anderen rechnerintern geschieht (DE 35 03 287 C3).

Um die signaltechnische Sicherheit des Rechnersystems zu gewährleisten, werden die den beiden Rechnern jeweils vorgeschalteten Eingabebaugruppen durch die zugehörigen Rechner unabhängig voneinander auf ordnungsgerechtes Funktionsverhalten überprüft. Dies bedingt das Vorhandensein entsprechender Prüfprogramme in den beiden Einzelrechnern des Rechnersystems und vor allem das Vorhandensein entsprechend prüfbarer Eingabebaugruppen.

Aufgabe der Erfindung ist es, das Verfahren nach dem Oberbegriff des Patentanspruches 1 so weiterzubilden, daß sich der Aufwand für das sichere Einlesen zweikanalig angebotener Eingangsdaten in die Rechner des Rechnersystems vermindert; ferner soll eine Einrichtung zur Durchführung dieses Verfahrens geschaffen werden.

Die Erfindung löst diese Aufgabe durch die kennzeichnenden Merkmale des Patentanspruches 1 bzw. des Patentanspruches 2. Durch die Anwendung der erfindungsgemäßen Maßnahmen wird der Hardware-Aufwand für das sichere Einlesen binärer Eingangsdaten halbiert; dies macht sich insbesondere dort vorteilhaft bemerkbar, wo die Rechner des Rechnersystems eine Vielzahl unterschiedlicher Eingangsdaten verarbeiten müssen.

Die Erfindung ist nachstehend näher erläutert, wobei auf die Zeichnung Bezug genommen wird.
- Figur 1: zeigt den relevanten Stand der Technik,
- Figur 2: eine Einrichtung zur Durchführung des erfindungsgemäßen Verfahrens und
- Figur 3: eine graphische Darstellung, aus der die bei Anwendung des erfindungsgemäßen Verfahrens erreichbare Aufwandsverringerung erkennbar ist.

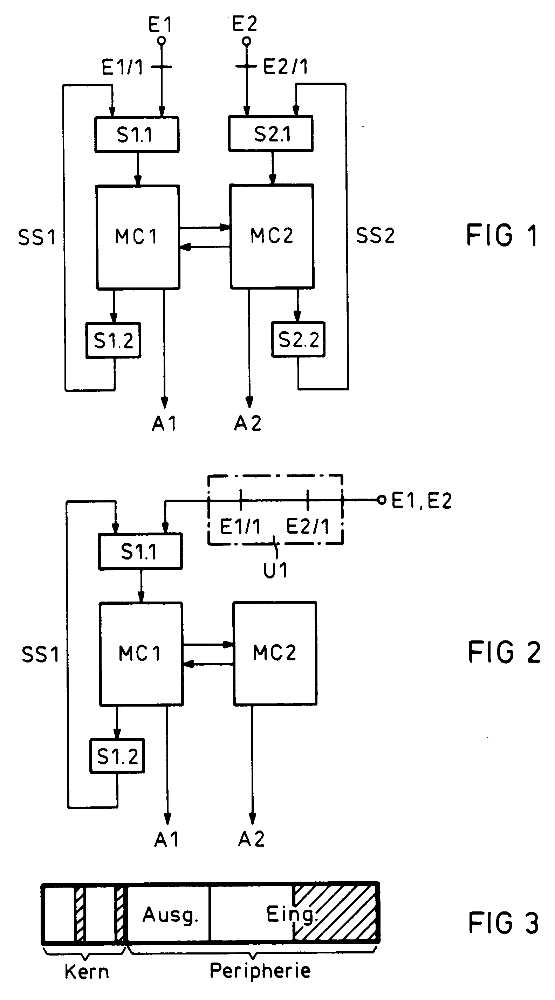

Das bekannte signaltechnisch sichere Rechnersystem gemäß Figur 1 besteht aus zwei baugleichen und nach dem gleichen Programm betriebenen, die gleichen Daten verarbeitenden Einzelrechnern MC1 und MC2. Nicht dargestellte Vergleicher sorgen für einen laufenden Vergleich der auf den internen Rechnerbussen liegenden Signale. Die Zu verarbeitenden Eingangsdaten E1, E2 werden den beiden Einzelrechnern unabhängig voneinander jeweils einkanalig angeboten; dies wird in der Zeichnung veranschaulicht durch Relaiskontakte E1/1 und E2/1 z. B. unterschiedlicher Eingaberelais. Die über zugehörige Eingabebaugruppen S1.1, S2.1 in die Einzelrechner übernommenen Eingangsdaten werden von den betreffenden Einzelrechnern an den jeweils anderen Einzelrecher übermittelt und dort mit den Eingangsdaten der eigenen Einbaugruppe auf logische Übereinstimmung verglichen. Die Eingabebaugruppen sind in bekannter Weise auf ordnungsgerechtes Funktionsverhalten prüfbar. Dies geschieht durch bestimmte Steuersignale SS1, SS2, die den Eingabebaugruppen zugeführt werden und dort zu einer Modifizierung der Eingangsdaten führen; diese Modifizierung wird in den Rechnern überwacht. Die Steuerung der Eingabebaugruppen wird in der Zeichnung verdeutlicht durch von den Einzelrechnern MC1 und MC2 steuerbare Baugruppen S1.2 und S2.2, die auf die Eingabebaugruppen S1.1 und S2.1 einwirken; bei der technischen Realisierung dieser Funktionsprüfung sind die Baugruppen S1.1 und S1.2 bzw. S2.1 und S2.2 baulich vereinigt. Aus den Eingangsdaten bilden die Einzelrechner abhängig von den in ihnen ablaufenden Programmen und den in ihnen hinterlegten Daten z. B. Ausgangssignale A1 bzw. A2, die nachgeordneten Schaltmitteln zuführbar sind.

Das erfindungsgemäße Verfahren ist nachstehend anhand eines in Figur 2 dargestellten Ausführungsbeispieles einer Einrichtung zur Durchführung dieses Verfahrens näher erläutert. Die Erfindung geht dabei von folgender Überlegung aus: Beim Stand der Technik werden die zweikanalig zur Verfügung gestellten Eingangsdaten beim rechnerinternen Datenaustausch auf Übereinstimmung geprüft, d. h. sie werden dort nach einer UND-Bedingung verknüpft. Da die UND-Verknüpfung in den Rechnern stattfindet, müssen den Rechnern die Eingangsdaten jeweils gesondert zugeführt werden. Dies geschieht über die Eingabebaugruppen, die aus den zuvor erläuterten Gründen auf ordnungsgerechtes Funktionsverhalten zu überprüfen sind. Die erfindungsgemäße Erkenntnis besteht nun darin, daß eine gleiche Sicherheit hinsichtlich der Eingabe von Daten in die Rechner eines Rechnersystems erreichbar ist, wenn die UND-Verknüpfung, die bisher in den Rechnern vorgenommen wird, extern geschieht und zwar in signaltechnisch sicherer Weise. In diesem Falle brauchen die UND-verknüpften Eingangssignale nämlich nur über eine einzige Eingabebaugruppe einem der Rechner übermittelt werden, der sie dann über die Datenaustauschsteuerung dem anderen Rechner mitteilt. Weil nach der Lehre der vorliegenden Erfindung nurmehr für einen einzigen Kanal des Rechnersystems Eingabebaugruppen erforderlich sind, ergibt sich hinsichtlich der Dateneingabe eine Aufwandseinsparung - bezogen auf den nach dem Stand der Technik erforderlichen Aufwand an Eingabebaugruppen - von 50%. Dadurch, daß der Vergleich der Eingangssignale extern geschieht, entfallen die Programmteile für den Vergleich sowie für das Lesen der zweiten Baugruppe einschließlich aller Wiederholungs- und Reaktionsprozeduren bei festgestellten z. B. betriebsbedingten Ungleichheiten der Eingabedaten in beiden Rechnern. Dies bedeutet für beide Rechner eine entsprechende Einsparung an Programmspeichervolumen und Verarbeitungszeit; beides kann für andere Aufgaben genutzt werden.

Nach der Erfindung ist vorgesehen, die zweikanalig zur Verfügung gestellten Eingangsdaten E1, E2 außerhalb der Rechner einer UND-Verknüpfung zu unterziehen. Dies geschieht in signaltechnisch sicheren UND-Gliedern. Ein solches UND-Glied U1 besteht bei dem Ausführungsbeispiel der Figur 2 aus der Reihenschaltung von Arbeitskontakten E1/1 und E2/1 von z. B. zwei nicht dargestellten Eingaberelais. Der jeweils geschlossene Schaltzustand der Kontakte kennzeichnet den die Betriebsfreigabe auslösenden Signalzustand; nur dann wenn beide Kontakte geschlossen sind, kann ein Strom in Richtung auf die Rechner fließen. Als Folge dieses Stromflusses wirken die Rechner über ihre Ausgangssignale betriebsfreigebend auf den jeweils zu steuernden Prozeß ein. Die Eingaben können z. B. Gleisfreimeldungen sein, die in den Rechnern für die Erarbeitung von Fahrtbegriffen verwendet werden. Wichtig ist die signaltechnisch sichere Verknüpfung der zweikanaligen Eingangsinformationen außerhalb der Rechner und die unverlierbare Isolation zwischen den Stromkreisen der zu verknüpfenden Signalquellen. Anstelle von Relaiskontakten können selbstverständlich auch andere einen Strom oder eine Spannung schaltende Eingabeschaltmittel verwendet werden, sofern sie die vorgenannten Bedingungen erfüllen. Die außerhalb der Rechner UND-verknüpften Eingangssignale gelangen über die vom Rechner MC1 auf ordnungsgerechtes Funktionsverhalten überprüfbare Eingabebaugruppe S1.1 auf den Rechner MC1 und werden von diesem signaltechnisch sicher durch die Datenaustauschsteuerung an den mit ihm zusammenwirkenden anderen Einzelrechner MC2 übermittelt. Die Verarbeitung der Eingangsdaten erfolgt dann, wie beim Stand der Technik, zweikanalig mit ein- oder zweikanaliger Ausgabe von Ausgangsdaten.

Figur 3 veranschaulicht graphisch die Einsparung an Aufwand (schraffiert dargestellt) bei Anwendung des erfindungsgemäßem Verfahrens gegenüber dem Aufwand, der bei Anwendung des Standes der Technik gegeben ist. Dieser Aufwand gliedert sich in Aufwand für den eigentlichen Rechnerkern, d. h. im wesentlichen die CPUs der Einzelrechner, der im linken Teil des Schaubildes dargestellt ist und in Aufwand für die Rechnerperipherie, der im rechten Teil der Darstellung zu sehen ist. Dabei ist angenommen, daß das Rechnersystem über doppelt so viel Eingabebaugruppen wie Ausgabebaugruppen verfügt. Die Darstellung zeigt, daß bei Anwendung des erfindungsgemäßen Verfahrens gegenüber dem bekannten Stand der Technik 50% der Eingabeperipherie und ein gewisser Anteil an Rechnerkern eingespart werden. Dies ist möglich unter Beibehaltung der signaltechnischen Sicherheit des Rechnersystems allein durch Verlagerung bestimmter Aufgaben aus den Rechnern in eine außerhalb der Rechner gelegene Ebene.

Das erfindungsgemäße Verfahren läßt sich nicht nur bei zwei von zwei Rechnern, sondern bei beliebigen Rechnersystemen verwenden, bei denen mehrere Einzelrechner das jeweils gleiche Problem nach dem gleichen Programm bearbeiten, beispielsweise bei einem zwei aus drei Rechnersystem. In diesem System dient der dritte Rechner den Anforderungen einer gesteigerten Zuverlässigkeit. Aus den gleichen Gründen sind dann die Eingabebaugruppen z. B. zu verdoppeln, wobei die UND-verknüpften Eingangssignale jeweils zwei Baugruppen anzubieten sind. In diesem Fall ergibt sich gegenüber einem voll ausgebauten 2V3-System eine Einsparung von 33% der Eingabebaugruppen des geschilderten Typs.

## Patentansprüche

1. Verfahren zur signaltechnisch sicheren Eingabe zweikanalig angebotener binärer Signale in ein aus mindestens zwei Einzelrechnern bestehendes signaltechnisch sicheres Rechnersystem, in deren Einzelrechner die Eingabesignale zweikanalig übernommen und zweikanalig verarbeitet werden, unter Anwendung rechnergesteuerter Prüfmethoden für die Funktionsprüfung der Eingabebaugruppen, über die die Eingabesignale den Rechnern zugeführt werden,
**dadurch gekennzeichnet,**
daß die zweikanaligen Eingabesignale außerhalb der Rechner einer signaltechnisch sicheren UND-Verknüpfung unterzogen werden und daß das jeweilige Ergebnissignal einer für alle Rechner des Rechnersystems gemeinsamen Eingabebaugruppe zugeführt wird.

2. Einrichtung zur Durchführung des Verfahrens nach Anspruch 1, **dadurch gekennzeichnet,** daß den Rechnern (MC1, MC2) des Rechnersystems signaltechnisch sichere UND-Glieder (U1) zur UND-Verknüpfung der zweikanalig vorliegenden Eingangssignale (E1, E2) zugeordnet sind und daß die Ausgänge der UND-Glieder auf die Eingänge von allen Rechnern des Rechnersystems gemeinsamen Eingabebaugruppen (S1.1) geführt sind.

3. Einrichtung nach Anspruch 2,
**dadurch gekennzeichnet,** daß die UND-Glieder (U1) durch die Reihenschaltung jeweils zweier Arbeitskontakte (E1/1, E2/1) von Eingaberelais realisiert sind, deren geschlossener Schaltzustand der die Betriebsfreigabe auslösende Signalzustand zugeordnet ist.

## Claims

1. Process for the secure signal inputting of binary signals presented by way of two channels into a signal-secure computer system consisting of at least two individual computers, the input signals being accepted by way of two channels and processed by way of two channels in the individual computers thereof using computer-controlled testing methods for the functional testing of the input modules by way of which the input signals are supplied to the computers, **characterised in that** the two-channel input signals are subjected to signal-secure ANDing outside the computers, and in that the respective result signal is supplied to an input module common to all of the computers of the computer system.

2. Device for implementing the process according to claim 1, **characterised in that** signal-secure AND elements (U1) for ANDing the input signals (E1, E2) present on two channels are assigned to the computers (MC1, MC2) of the computer system, and in that the outputs of the AND elements are led to the inputs of input modules (S1.1) common to all of the computers of the computer system.

3. Device according to claim 2, **characterised in that** the AND elements (U1) are realised by the series connection of two respective make contacts (E1/1, E2/1) of input relays, with the signal state that triggers the operating release being assigned to the closed circuit state of the said contacts.

## Revendications

1. Procédé d'introduction sûre, dans la technique des signaux, de signaux binaires fournis sur deux voies dans un système d'ordinateurs sûr en technique des signaux, qui est constitué d'au moins deux ordinateurs individuels, dans lesquels on prend en charge sur deux voies les signaux d'introduction et on les traite sur deux voies, en utilisant des méthodes de vérification commandées par ordinateur pour vérifier le fonctionnement des modules d'introduction par lesquels on envoie les signaux d'introduction aux ordinateurs,
caractérisé en ce que
on soumet les signaux d'introduction sur deux voies, en dehors des ordinateurs, à une combinaison ET sûre en technique des signaux et on envoie le signal respectif de résultat à un module d'introduction commun à tous les ordinateurs du système d'ordinateur.

2. Dispositif pour la mise en oeuvre du procédé suivant la revendication 1, caractérisé en ce qu'il est associé aux ordinateurs (MC1, MC2) du système d'ordinateurs des éléments ET (U1) sûrs dans la technique des signaux et effectuant une combinaison ET des signaux (E1, E2) d'entrée présents sur les deux voies et les sorties des éléments ET sont reliées aux entrées de modules (S1.1) d'introduction communs à tous les ordinateurs du système d'ordinateurs.

3. Dispositif suivant la revendication 2
caractérisé en ce que les éléments ET (U1) sont réalisés par le branchement en série de deux contacts (E1/1, E2/1) de travail de relais d'introduction, l'état du signal déclenchant la libération du fonctionnement étant associé à l'état de branchement fermé de ces contacts.
